Europäisches Patentamt

European Patent Office

Office européen des brevets

(11) Veröffentlichungsnummer: **0 085 829**
**B1**

# (12) EUROPÄISCHE PATENTSCHRIFT

(45) Veröffentlichungstag der Patentschrift:
26.11.86

(51) Int. Cl.⁴: **E 21 D 20/02**

(21) Anmeldenummer: 83100100.3

(22) Anmeldetag: 07.01.83

(54) **Verfahren zum Verkleben von Ankerstangen in Bohrlöchern.**

(30) Priorität: 12.01.82 DE 3200574

(43) Veröffentlichungstag der Anmeldung:
17.08.83 Patentblatt 83/33

(45) Bekanntmachung des Hinweises auf die Patenterteilung:
26.11.86 Patentblatt 86/48

(84) Benannte Vertragsstaaten:
AT CH DE FR LI

(56) Entgegenhaltungen:
EP-A-0 085 826

Chemical Abstracts Band 95, 23. November - 7.
Dezember 1981, Columbus, Ohio, USA, MITSUI
NISSO URETHANE K.K. et al. "Adhesive
compositions for anchor bolts", Seite 48, Spalte 2,
Abstract Nr. 188295p

(73) Patentinhaber: Bergwerksverband GmbH, Franz-
Fischer- Weg 61, D-4300 Essen 13 (DE)

(72) Erfinder: **Cornely, Wolfgang, Dr., Wehlingsweg 8,
D-4390 Gladbeck (DE)**
Erfinder: **Mehesch, Hans, Dr., Ernestinenstrasse
220, D-4300 Essen 11 (DE)**
Erfinder: **Meyer, Frank, Dr., Potthoffs Börde 22,
D-4300 Essen 1 (DE)**

(74) Vertreter: **Frühbuss, Heinrich, Dr.rer.nat., Hubert-
Reissner- Strasse 5a, D-8032 Gräfelfing b.
München (DE)**

EP 0 085 829 B1

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

**Beschreibung**

Die Erfindung betrifft ein Verfahren zum Verkleben von Ankerstangen in Bohrlöchern gemäß dem Oberbegriff des geltenden Hauptanspruches.

Es ist bekannt, ungesättigte Polyesterharze und Polyurethane als Reaktivharzmasse für die Befestigung von Ankerstangen in Bohrlöchern zu verwenden. Zu diesem Zweck sind zur Bildung der Polyurethane die beiden Komponenten Polyisocyanat und Polyol getrennt in zwei Kammern einer Patrone, z. B. aus Kunststoffolie oder extrudierter, spröder Masse (vergleiche DE-C- 26 41 776), untergebracht. Durch drehendes Einbringen des Ankers in die Bohrlöcher werden die Kammern zerstört und die beiden Komponenten vermischt, so daß sie unter Bildung von Polyurethanen miteinander reagieren. Gemäß der DE-B- 12 05 038 und der DE-B- 17 84 458 geliert das Polyurethanharz erst nach zwei Stunden und härtet nach 5 bis 6 Stunden aus. Anwendungstechnisch notwendig sind jedoch weitaus kürzere Gelier- und Härtungszeiten, da die Ankerstange in aufwärtsgerichteten Bohrlöchern bis zum Erreichen des Gelierpunktes gegen Herausrutschen gesichert werden muß und der Anker, vor allem im Tunnel- und Bergbau, möglichst frühzeitig belastbar sein soll.

Die DE-B- 27 05 751 beschreibt ein System, daß diesen Nachteil dadurch vermeidet, daß tertiäre Aminogruppen enthaltende Polyole als Hydroxyl-Komponente dienen, die gleichzeitig katalytisch wirksam sind, so daß Gelier- und Härtungszeiten von weniger als einer Minute erreicht werden. Laut Anspruch 3 dieser Auslegeschrift ist jedoch der Zusatz von Wasser auf 0,5 Gew.-%, bezogen auf das Polyol, begrenzt. Bei höheren Wassermengen, z. B. feuchten Bohrlöchern, schäumt die Mischung so stark auf, dass der gebildete ausgehärtete Schaum keine nennenswerte Zugbelastung aufnehmen kann.

Aus der GB-A-1 218 360 ist bekannt, dass man die Zugfestigkeit von Polyurethanen dadurch erhöhen kann, dass man überschüssige Diarylmethandiisocyanate mit Polyethern, insbesondere difunktionellen Polypropylenethern mit einem Molekulargewicht von 500 bis 4000, insbesondere 1000 bis 2000, umsetzt und die erhaltenen Prepolymeren nachträglich durch Reaktion mit einem aliphatischen Polpolhärtet. Konkrete Gelier- und Härtungsseiten, bezogen auf Umgebungstemperatur, sind nicht offenbart, desgleichen nicht nähere Angaben über in Betracht kommende Polyurethane und die mit diesen erzielbaren Zugfestigkeiten. in Anwesenheit von Wasser im Bohrloch.

In der älteren, nicht vorveröffentlichten EP-A1-0 085 826 ist ein Verfahren zum Verkleben von Ankerstangen in Bohrlöchern geoffenbart, bei dem die Ankerstange in ein mit einer Polyisocyanat-Komponente und einer Hydroxyl-Komponente gefülltes Bohrloch drehend eingestossen wird, wobei eine mit Polyisosoyanat-Komponente gefüllte und eine mit Hydroxyl-Komponente gefüllte Patrone voder eine Zweikammer-Patrone, in der die beiden Komponenten getrennt voneinander vorliegen, verwendet werden und bei dem als Polyisocyanat-Komponente Prepolymere aus der Umsetzung von Polyisocyanaten mit einem oder mehreren difunktionellen Polyolen des Molekulargewichtsbereiches 800 bis 5.000, vorzugsweise 1.600 bis 3.000, dienen und als Hydroxyl-Komponenten Polyole mit OH-Zahlen von 250 bis 2.000, vorzugsweise 1.000 bis 1.850 und oder Wasser verwendet werden. Verfahren dieser Art sind von der Erfindung ausgenommen.

Der Erfindung liegt die Aufgabe zugrunde, ein Verfahren gemäss Oberbegriff des Hauptanspruches auch in nassen Bohrlöchern bei gleichzeitig gut einstellbaren, im wesentlichen kurzen Gelier- und Härtungszeiten verwendbar zu machen.

Diese Aufgabe wird erfindungsgemäss dadurch gelöst, dass als Polyisocyanat-Komponente Prepolymere aus der Umsetzung von Polyisocyanaten mit einem oder mehreren difunktionellen Polyolen des Molekulargewichtsbereiches 800 bis 5000, vorzugsweise 1600 bis 3000 dienen und als Hydroxyl-Komponente, bezogen auf die Masse, 1 bis 25 Gew.% an Polyolen mit einer OH-Zahl von 250 bis 2000, vorzugsweise 1000 bis 1850 und/oder Wasser verwendet werden.

Bereits in der DE-A- 24 48 958 wird auf die Gefahr des Wassers für die Abdichtung von geologischen Formationen mittels Polyurethan-Systemen hingewiesen und, neben der Verwendung von Prepolymeren aus Toluylendiisocyanat und Gemischen aus Diphenylmethandiisocyanat mit dessen Isomeren und höherkernigen Anteilen, also des Roh-MDI als Isocyanat-Komponente und Hydroxyl-Komponenten des Molekulargewichtsbereiches von 400 - 600, die Zugabe von als Beschleuniger wirkenden metallorganischen Verbindungen und Schaumstabilisatoren vorgeschlagen. Bei diesem Verfahren werden Reaktivharze unmittelbar in geologische Formationen eingepreßt und somit nicht die Aufgabe gelöst, Ankerstangen in Bohrlöchern zu verkleben. Prepolymere aus Toluylendiisocyanat kommen für die Praxis aus toxikologischen Gründen ohnehin nicht in Betracht. Angaben über die Herstellung von für die Verklebung von Ankerstangen geeigneten Prepolymeren sind dieser DE-A- nicht zu entnehmen.

Der wesentliche Vorteil des Verfahren, gemäß der Erfindung besteht darin, daß Wasser ganz oder teilweise als Hydroxyl-Komponente dienen kann, so daß eine hervorragende Haftung der Ankerstangen auch in feuchten Bohrlöchern erreicht wird. Demgegenüber versagen die mit Polyesterharzen und Härtern gefüllten 2-Kammer-Patronen, wenngleich diese Patronen in trockenen Bohrlöchern bislang die höchsten Haftfestigkeiten erreichen.

Aus arbeitshygienischen und technischen Gründen wird jedoch seit längerem das nasse Bohren mit simultaner Wassereindüsung in das Bohrlochtiefste gegenüber dem trockenen Bohren bevorzugt, so daß die Verwendung von mit Polyesterharzen gefüllten Patronen kaum noch möglich ist, zumal diese das gesundheitsschädliche Styrol in größeren Mengen enthalten.

Durch die Verwendung von Wasser oder wäßrigen Lösungen als Hydroxyl-Komponente wird des weiteren der Vorteil erzielt, daß das Harz im Verlauf der Polyurethanbildungsreaktion in geringem, jedoch wegen des Prepolymers als Isocyanat-Komponente nicht zu starkem Maße aufschäumt. Durch die damit verbundene Volumenvergrößerung wird ein besserer Formschluß zwischen Harzmasse und Bohrloch erzielt, was vor allem bei ausgeschlagenen Bohrlöchern und klüftigem Gebirge von Bedeutung ist.

Als Polyisocyanat-Komponente zur Herstellung des Prepolymers kommen die in der Polyurethan-Chemie bekannten, bei Raumtemperatur flüssigen Roh-Polyisocyanate in Betracht, wie sie durch Anilin/Formaldehyd-Kondensation und anschließende Phosgenierung hergestellt werden. Auch die Modifizierungsprodukte derartiger Polyisocyanatgemische der Isocyanat-Reihe, z. B. deren Carbodiimidgruppen, Biuretgruppen, Urethangruppen oder Allophanatgruppen enthaltende Derivate sind geeignet. Derartige Polyisocyanate sind z. B. beschrieben bei Ullmann, Verlag Chemie, 4. Auflage, Band 19, Seiten 303 bis 305.

Besonders geeignet sind die bei Raumtemperatur flüssigen, durch Phosgenierung von Anilin/Formaldehyd-Kondensation der mittleren Funktionalität von 2,1 - 3,5, vorzugsweise 2,2 - 2,8, erhaltenen Polyisocyanatgemische, die im wesentlichen aus isomeren Diisocyanatodiphenylmethanen und deren oligomeren Homologen bestehen ("MDI"), da diese Isocyanate eine mittlere Funktionalität von 2,1 - 3,5, vorzugsweise von 2,2-2,8, besitzen und eine Funktionalität in diesem Bereich für eine gute Vernetzung mit den linearen Polyolen erwünscht ist.

Bei den Polyolen, die zur Herstellung der Prepolymere verwendet werden, handelt es sich um difunktionelle Polyole mit mittleren Molekulargewichten zwischen 800 und 5.000, vorzugsweise 1.600 und 3.000, mithin um langkettige difunktionelle Polyole. Dies entspricht einer OH-Zahl von 140 bis 22, bzw. vorzugsweise dem OH-Zahl-Bereich von 70 - 37. In Betracht kommen die Propylenoxid-, Ethylenoxid- oder gemischten Propylenoxid/Ethylenoxid-Polyether-Polyole, deren Polymerisation durch Wasser oder ein niedermolekulares Diol, wie Ethylenglykol, Propan-1,2-diol, Propan-1,3-diol oder Butan-1,4-diol, gestartet worden ist. Oben genannte Polyisocyanate und Polyetherpolyole werden nach im Grunde bekannten Verfahren (s. Vieweg-Höchtlen, Kunststoff-Handbuch, VIII, S. 447 ff.) zu Polyisocyanat-Prepolymeren vorpolymerisiert.

Polyisocyanate werden hierbei in großem Überschuß gegenüber den Polyetherpolyolen eingesetzt, um die Viskosität des resultierenden Polyisocyanat-Prepolymeren innerhalb der Grenzen der Handhabbarkeit zu halten. Demgemäß soll die Viskosität der Polyisocyanat-Prepolymeren unterhalb von 50.000 m Pa. s, vorzugsweise unter 10.000 m Pa. s, liegen. Werden demgemäß tri- und höherfunktionelle Polyole zugesetzt, z. B. in Mengen über 10 Gew.-%, so steigt die Viskosität so hoch an, daß keine wirklich brauchbaren Resultate erzielt werden können.

Als Hydroxylkomponente für die erfindungsgemäße Reaktivharzmasse sind Polyole mit OH-Zahlen von 250 bis 2.000, vorzugsweise von 1.000 bis 1.850, geeignet. Sie bewirken eine schnelle und durchgehende Härtung des Harzes. Besonders geeignet sind kurzkettige Polyole, wie Ethylenglykol, Diethylenglykol, Triethylenglykol, Glycerin, Propan-1,2-diol, Propan-1,3-diol, Butan-1,4-diol. Gelöst in diesen Polyolen oder in Wasser sind auch feste Polyole als Hydroxylkomponente geeignet, wie z. B. Pentaerythrit, Sorbit, Mannit, Fructose, Galactose, Rohrzucker, Melasse, Stärke, Hydroxyethylcellulose, Polyvinylalkohol. Auch Wasser allein kommt als Hydroxyl-Komponente in Betracht. Nach dem Verfahren gemäß der vorliegenden Erfindung können das Prepolymer und/oder die Hydroxyl-Komponenten ein tertiäres Amin enthalten oder die Hydroxyl-Komponente ein Aminogruppen enthaltendes Polyol darstellen.

Hervorragend geeignet sind z. B. Polyole, die eine oder mehrere Aminogruppen enthalten. Beispiele für diese Polyole sind Triethanolamin, Diethanolamin, Alkoxylierungsprodukte von Ammoniak, Triethanolamin oder Ethylendiamin mit Epoxiden, wie Ethylenoxid und Propylenoxid.

Geeignete tertiäre Amine sind beispielsweise N.N-Dimethylcyclohexylamin, Triethylamin, Dimethylethanolamin, Tributylamin, Diazabicyclo-(2,2,2)-octan, N-Methylmorpholin, N,N,N',N'-Tetramethylethylendiamin. Derartige Amine werden zweckmäßigerweise in Mengenanteilen von 0,2 bis 5 % zugesetzt.

Nach dem Verfahren gemäß der vorliegenden Erfindung kann weiterhin eine oder jede der beiden Komponenten eine metallorganische Verbindung als Katalysator für die Polyurethan-Reaktion enthalten.

Geeignete metallorganische Verbindungen sind Salze organischer Säuren mit Metallen der Gruppen IIb und IVb des Periodensystems und Übergangsmetalle, insbesondere Verbindungen des Zinns, wie beispielsweise Zinndilaurat, Zinndiethylhexoat, Zinndinaphthenat, Zinndistearat, Dibutylzinndilaurat, Dimethylzinndilaurat, Dioctylzinndistearat, Dibutylzinndistearat und andere Verbindungen der allgemeinen Formeln $Sn(OOC-R)_2$ und $R'_2Sn(OOCR)_2$, wobei R und R' aliphatische Reste bezeichnen. Zweckmäßigerweise werden im allgemeinen 0 - 2 Gew.-% dieser Verbindungen der Reaktivharzmasse zugesetzt.

Es ist vorteilhaft für die Verklebungsfestigkeit des Dübels oder der Ankerstange, der Hydroxyl-Komponente und/oder der Prepolymer-Komponente Füllstoffe zuzusetzen. Diese an sich bekannten Füllstoffe bestehen beispielsweise aus gemahlenem Kalkstein, Quarzmehl, Schwerspat oder Glasfasern. Es kommen Zusätze von 10 bis 80 Gew.-%, vorzugsweise 20 - 70 Gew.-% Füllstoff, bezogen auf die gesamte Harzmasse, in Betracht.

Aufgrund der kurzen Gelier- und Aushärtezeiten der vermischten Komponenten ist es möglich und sinnvoll, zum Setzen von Ankern automatische Bohr- und Setzmaschinen zu verwenden.

Aus dem gleichen Grunde ist eine mit der erfindungsgemäßen Isocyanat Prepolymerkomponente gefüllte Patrone auch besonders für einen Einsatz in aufwärtsgerichteten Bohrlöchern geeignet, da das Harz der zerstörten Patrone nicht mehr aus dem Bohrloch auslaufen kann und so Gefährdung der Arbeiter und Materialverluste vermieden werden können.

Die Hydroxylkomponente wird zweckmäßigerweise über die Bohrlochspülung oder eine andere Flüssigkeitszuführung auf die Bohrlochwand aufgebracht. Die Isocyanat-Prepolymerkomponente wird anschließend in Form der "Einkomponentenpatrone", deren Inhalt nur aus durch Reaktion mit Wasser und/oder Polyolen zu Polyurethanen führenden Prepolymeren besteht, in das Bohrloch eingeführt oder über eine Verpreßeinrichtung in das Bohrloch gedrückt oder auf andere Weise in das Bohrloch verbracht.

Beide Komponenten können auch gemeinsam in das Bohrloch gepreßt werden, wobei vorsorglich durch Zusatz eines Thixotropierungsmittels ein Auslaufen der Harzmasse aus dem Bohrloch vermieden werden kann.

### Beispiel 1

Bei einer konstanten Temperatur von 40° C werden 500 g eines Polypropylenglykols auf Basis Propan-1,2-diol mit der OH-Zahl 58 und einem mittleren Molekulargewicht von 2.000 zu 1.000 g eines Polyisocyanates auf Basis von Anilin-Formaldehyd-Kondensaten mit einer Viskosität von 220 m Pa. s und einem NCO-Gehalt von 31 % unter Schutzgas zugetropft und anschließend noch 12 h bei 60° C gerührt. Das so hergestellte Prepolymer hat einen NCO-Gehalt von 19 % und eine Viskosität von 2.450 m Pa. s.

100 g dieses Prepolymers werden in eine aus 0,1 mm starker Polyamid-Folie hergestellte Patrone gefüllt. Die Patrone hat eine Länge von 26 cm und einen Durchmesser von 24 mm.

Nach Einführen in ein nasses Bohrloch von 28 mm Durchmesser und 2 m Tiefe wird diese Patrone durch eine drehend nachgeschobene Ankerstange zerstört. Gelierzeit des Harzes aus den vermischten Komponenten (Prepolymer und Wasser):12 min. Nach 24 h konnte die Ankerstange erst mittels Zugbelastung von 20 t aus dem Bohrloch gezogen werden.

Zum Vergleich wird die Patrone mit einem Prepolymer gefüllt, das durch Polyaddition von 1.000 g des obigen Polyisocyanates mit 500 g Polypropylenglykol der OH-Zahl 260 bzw. des mittleren Molekulargewichtes 470 hergestellt war. Dieses Prepolymer hat einen NCO-Gehalt von 12,9 % und eine Viskosität von 900.000 m Pa. s.

100 g dieses Prepolymers werden in die obige Patrone gefüllt und wie vorstehend für das Verkleben einer Ankerstange in einem nassen Bohrloch verwandt. Gelierzeit des Harzes: 10 min. Nach 24 h konnte die Ankerstange bereits mittels einer Zugbelastung von 5 t aus dem Bohrloch gezogen werden.

Zum Vergleich mit dem Verfahren gemäß der DE-C- 27 05 751 wird die Patrone mit 100 g des obigen Polyisocyanates und das Bohrloch vorab mit 100 g eines aus Ethylendiamin und Propylenoxid hergestellten Polyols der OH-Zahl 640 und des mittleren Molekulargewichtes von 310 in Mischung mit 0,5 Gew.-Teilen Wasser gespült. Die Gelierzeit des im nassen Bohrloch gebildeten Harzes betrug eine Minute. Nach 24 h konnte die Ankerstange bereits mittels einer Zugbelastung von 4,5 t aus dem Bohrloch gezogen werden.

### Beispiel 2

Gemäß Beispiel 1 wurde ein Loch von 2 m Tiefe und 28 mm Durchmesser naß gebohrt. Anschließend wurde eine 50%ige Glycerin/Wasser-Mischung in das Bohrlochtiefste des aufwärtsgebohrten Bohrloches eingespritzt. Danach wurden 90 g Prepolymer der Viskosität 10.000 Pa. s in Mischung mit 45 g Quarzmehl und 2 g Triethylenamin in das Bohrloch eingepreßt und die Ankerstange eingeführt.

Die Glierzeit betrug 50 s.

Nach 24 h trat bei 24 t Zugbelastung Bruch der Ankerstange auf.

### Beispiel 3

Mittels einer automatischen Firstankervorrichtung wurde ein Bohrloch mit 28 mm Durchmesser und 2 m Tiefe naß gebohrt. Über eine Zweikomponenteninjektionsvorrichtung wurde das Bohrloch mit 150 g mit Quarzmehl vermischtem Prepolymer gemäß Beispiel 2 und 40 g 70%iger Melasse, die mit 5 g Triethylendiamin und 0,5 g eines Katalysators auf Dibutylzinndilaurat-Basis versetzt war, gefüllt. Daraufhin wurde eine Ankerstange entsprechend Beispiel 1 in das Bohrloch eingebracht.

Die Gelierzeit betrug 45 s.

Nach 24 h konnte bei 28 t Zugbelastung die Ankerstange aus dem Bohrloch gezogen werden.

### Beispiel 4

Eine Patrone aus Glas von 24 mm Durchmesser und einer Länge von 26 cm wurde mit 150 g eines Prepolymeren gemäß Beispiel 1 gefüllt. Die Patrone war an beiden Enden mit Stopfen verschlossen.

Diese Patrone wurde gemäß Beispiel 1 in ein nasses, zuvor mit 15 Gew.-% Triethanolamin enthaltendem, 50%igen, wäßrigen Glycerin ausgespültes Bohrloch eingeführt, woraufhin die Ankerstange drehend ebenfalls eingeführt wurde. Durch die Ankerstange wurde die Patrone zerstört und ihr Inhalt mit der an der Bohrlochwand haftenden Lösung vermischt.

Die Gelierzeit betrug 50 s.

Nach 24 h konnte die Ankerstange bei 26 t Zugbelastung aus dem Ankerloch gezogen werden.

### Beispiel 5

In ein trocken gebohrtes Loch von 28 mm Durchmesser und 2 m Tiefe wurde eine wäßrige Lösung aus 50%igem Glycerin, in der 2 % Dibutylzinndilaurat gelöst waren, eingespritzt und anschließend die Patrone gemäß Beispiel 4 nachgeschoben und die Ankerstange drehend in dieses Bohrloch eingeführt, wodurch der Inhalt der Patrone mit der Lösung im Bohrloch vermischt wurde.

Die Gelierzeit betrug 70 s.

Nach 24 h konnte die Ankerstange bei 20 t Zugbelastung aus dem Ankerloch gezogen werden.

### Patentansprüche

1. Verfahren zum Verkleben von Ankerstangen in Bohrlöchern, bei dem eine polyisocyanat-Komponente und ggf. eine Hydroxyl-Komponente in ein Bohrloch eingebracht und. die Ankerstange drehend in das Bohrloch eingestossen wird, ausgenommen Verfahren unter Verwendung einer Zweikammer-Patrone und zweier Einkammer-patronen, dadurch gekennzeichnet, dass als polyisocyanat-Komponente Prepolymere aus der Umsetzung von Polyisocyanaten mit einem oder mehreren difunktionellen polyolen des Molekulargewichtsbereiches 800 bis 5000, vorzugsweise 1600 bis 3000, dienen und als Hydroxylkomponente, bezogen auf die Masse, 1 bis 25 Gew.% an Polyolen mit einer OH-Zahl von 250 bis 2000, vorzugsweise 1000 bis 1850 und/oder Wasser verwendet werden.

2. Verfahren nach Anspruch 1, dadurch gekennzeichnet, dass die zur Herstellung der Prepolymeren verwendeten Polyisocyanate aus Phosgenierungsprodukten von Anilin-Formaldehyd-Kondensaten der mittleren Funktionalität von 2,1 bis 3,5, vorzugsweise 2,2 bis 2,8 bestehen.

3. Verfahren nach Anspruch 1 bis 2, dadurch gekennzeichnet, daß als Hydroxyl-Komponente wäßrige Lösungen fester oder flüssiger Polyole dienen.

4. Verfahren nach Anspruch 1 bis 3, dadurch gekennzeichnet, daß eine der beiden Komponenten ein tertiäres Amin enthält oder die Hydroxyl-Komponente ein Aminogruppen enthaltendes Polyol ist.

5. Verfahren nach Anspruch 1 bis 4, dadurch gekennzeichnet, daß eine der beiden Komponenten eine metallorganische Verbindung als Katalysator für die Polyurethan-Reaktion enthält.

6. Verfahren nach Anspruch 1 bis 5, dadurch gekennzeichnet, daß der Prepolymer-Komponente Füllstoffe zugesetzt sind.

### Revendications

1. Procédé de consolidation de tiges d'ancrage dans des trous de mine, dans lequel on introduit dans un trou de mine un composant polyisocyanate et éventuellement un composant hydroxylé, et on enfonce avec un mouvement rotatif la tige d'ancrage dans le trou de mine, à l'exception de procédés faisant intervenir une cartouche à deux compartiments et deux cartouches à un compartiment, caractérisé en ce que l'on utilise en tant que composant polyisocyanate des prépolymères obtenu par réactior de poly-isocyanates avec un ou plusieurs polyols difonctionnels à gamme de poids moléculaire allant de 800 à 5.000, de préférence de 1.600 à 3.000, et on utilise en tant que composant hydroxylé, par rapport à la masse totale, 1 à 25 % en poids de polyols ayant un indice OH allant de 250 à 2.000, de préférence de 1.000 à 1.850, et/ou de l'eau.

2. Procédé selon la revendication 1, caractérisé en ce que les poly-isocyanates utilisés pour la préparation des prépolymères consistent en des produits de phosgénation de produits de condensation d'aniline et de formaldéhyde, dont la fonctionnalité moyenne va de 2,1 à 3,5, de préférence de 2,2 à 2,8.

3. Procédé selon les revendications 1 et 2, caractérisé en ce que l'on utilise en tant que composant hydroxylé des solutions aqueuses de polyols solides ou liquides.

4. Procédé selon les revendications 1 à 3, caractérisés en ce que l'un des deux composants contient une amine tertiaire ou le composant hydroxylé est un polyol contenant des groupes amino.

5. Procédé selon les revendications 1 à 4, caractérisé en ce que l'un des deux composants contient un composé organo-métallique en tant que catalyseur de la réaction conduisant au polyuréthanne.

6. Procédé selon les revendications 1 à 5, caractérisé en ce que l'on ajoute des charges au composant prépolymère.

## Claims

1. A method of cementing tie bars in bore holes, wherein a polyisocyanate component and, if required, a hydroxyl component are introduced into the bore hole and the tie rod is rotatingly cast into the bore hole, excluding the method of using a two chamber cartridge and two single chamber cartridges, characterised in that prepolymers resulting from the conversion of polyisocyanates with one or more difonctional polyols having a molecular weight range of from 800 to 5000, preferably from 1600 fo 3000, serve as the polyisocyanate component and 1 to 25 wt.% of Polyols having an OH-number of from 250 to 2000, preferably from 1000 to 1850, or water, relative to the mass, are used as the hydroxyl component.

2. Method according to claim 1, characterised in that the polyisocyanate used for preparing the prepolymers consists of phosgenating products of aniline-formaldehyde condensates having an average functionality of from 2.1 to 3.5.

3. Method according to claims 1 to 2, characterised in that aqueous solutions of solid or fluid polyols serve as the hydroxyl components.

4. Method according to claims 1 to 3, characterised in that one of the two components contains a tertiary amine or the hydroxyl component is a polyol containing an amino group.

5. Method according to claims 1 to 4, characterised in that one of the two components contains a metal organic compound as a catalyst for the polyurethane reaction:

6. Method according to claims 1 to 5, characterised in that fillers are added to the prepolymer components.